# FASCICULE DE BREVET EUROPEEN

(11) **EP 1 723 788 B1**
(45) Date de publication et mention de la délivrance du brevet: **02.11.2011**
(21) Numéro de dépôt: 05716761.1
(22) Date de dépôt: 22.02.2005
(51) Int. Cl.: H04N 7/16, H04N 7/167, H04N 5/00

(54) **PROCÉDÉ DE GESTION DU TRAITEMENT DE DONNÉES À ACCÈS CONDITIONNEL PAR AU MOINS DEUX DÉCODEURS**
PROZESS ZUR VERWALTUNG DER HANDHABUNG VON DATEN DES BEDINGTEN ZUGANGS DURCH MINDESTENS ZWEI DECODIERER
PROCESS FOR MANAGING THE HANDLING OF CONDITIONAL ACCESS DATA BY AT LEAST TWO DECODERS

(30) Priorité: 23.02.2004 EP 04100702
(43) Date de publication de la demande: 22.11.2006
(73) Titulaire: Nagravision SA, 1033 Cheseaux-sur-Lausanne (CH)
(72) Inventeur: KUDELSKI, Henri, CH-1091 Grandvaux (CH); LE BUHAN, Corinne, CH-1619 Les Paccots (CH); MOREILLON, Guy, CH-1042 Bioley-Orjulaz (CH)
(74) Mandataire: Leman Consulting S.A.
(86) Numéro de dépôt international: PCT/EP2005/050750
(87) Numéro de publication internationale: WO 2005/091634

(56) Documents cités:
- WO-A-03/105437
- US-A1- 2003 097 563
- US-B1- 6 405 369

## Description

La présente invention concerne un procédé de gestion du traitement de données à accès conditionnel par au moins deux décodeurs, notamment dans le cadre de l'accès à des événements de télévision à péage. Elle concerne également un décodeur pour la mise en oeuvre de ce procédé.

Généralement, pour pouvoir accéder à un contenu chiffré correspondant à des événements diffusés par des opérateurs de télévision à péage, tels que des films, des matchs de sports ou autre, il faut acquérir un abonnement, un décodeur et un module de sécurité. Certains abonnés souhaitent disposer de plusieurs décodeurs et de plusieurs modules de sécurité pour que plusieurs utilisateurs puissent accéder aux événements diffusés à partir de plusieurs téléviseurs disposés dans des pièces différentes de leur habitation.

Dans ce cas, le prix demandé pour les abonnements, décodeurs et/ou modules de sécurité supplémentaires est généralement inférieur au prix demandé pour le premier abonnement, décodeur et/ou module de sécurité. On cherche toutefois à éviter qu'un abonné n'acquière plusieurs ensembles décodeurs/modules de sécurité, en bénéficiant de la réduction de prix pour les ensembles supplémentaires et qu'il fasse bénéficier un tiers non abonné de cette réduction ou revende ces ensembles à un prix plus bas que le prix d'acquisition normal.

Une solution pour éviter ceci consiste à imposer des conditions de fonctionnement telles qu'un décodeur qui a été sorti de son environnement ne permette plus de déchiffrer un contenu chiffré, alors que ce même décodeur fonctionne de façon conventionnelle aussi longtemps qu'il reste dans son environnement. Ainsi, un décodeur revendu ou donné à un tiers ne pourra pas fonctionner.

Un système permettant d'atteindre en partie ce but est décrit dans le brevet européen publié sous le numéro EP 0 826 288. Ce brevet décrit un système de télévision à péage dans lequel un abonné dispose d'au moins deux décodeurs, chaque décodeur étant associé à une carte à puce destinée à permettre le déchiffrement du contenu envoyé sur les décodeurs liés au système de télévision. Chaque carte à puce contient un certain nombre d'informations qui permettent de l'identifier. Ces informations, appelées "données de chaînage", sont par exemple une signature, une clé ou un autre élément de détermination. Toutes les cartes liées au même abonné ont au moins une des données de chaînage en commun. Des cartes d'abonnés différents n'ont pas de données en commun.

Les cartes à puce de l'abonné ou au moins l'une d'entre elles, sont désactivées après une certaine durée d'utilisation. Le contenu envoyé sur le décodeur considéré ne peut alors plus être déchiffré. Une carte désactivée peut être réactivée si l'abonné dispose d'une autre carte encore active et d'un décodeur lié au même abonné. Pour réaliser ceci, le système selon cette invention fonctionne de la manière suivante. Les données liées à une carte active sont tout d'abord mémorisées dans le décodeur dans lequel cette carte est introduite. Lorsqu'une carte est désactivée, elle doit être introduite dans un décodeur associé à une carte active de l'abonné. Les données de chaînage telles que la signature, la clé, etc., mémorisées dans le décodeur, sont authentifiées avec les données de chaînage de la carte désactivée. Si ces données concordent, la carte est réactivée pour une certaine durée. Si ces données de chaînage ne concordent pas, la carte n'est pas réactivée.

Dans ce système, n'importe quel décodeur lié à une carte active de l'abonné peut permettre de réactiver une carte désactivée du même abonné. De ce fait, si des cartes de l'abonné ont été vendues à des personnes géographiquement proches de l'abonné initial, les personnes qui ont une carte désactivée peuvent introduire cette carte dans n'importe quel décodeur lié à une carte active de l'abonné pour refaire fonctionner la leur. L'effet dissuasif recherché par l'invention n'est donc que partiellement atteint. De plus, la réactivation doit être effectuée régulièrement et nécessite une manipulation de la part de l'utilisateur. De telles contraintes sont généralement peu appréciées par les utilisateurs "honnêtes". De plus, il existe un risque de fausse manoeuvre ou de perte de carte qui n'est pas négligeable.

II existe en outre une manière simple d'éviter les contraintes liées au procédé de ce brevet. II suffit en effet que l'acheteur d'un ensemble décodeur/carte à puce non autorisé acquière deux ensembles. Ainsi, il pourra toujours réactiver une carte lorsque celle-ci sera désactivée.

La demande WO 03/105437, de même que la demande de brevet US 200310097563, décrit un système de réception de contenu à accès conditionnel à partir d'au moins deux terminaux appartenant à un même utilisateur. Dans ce système, l'un des terminaux joue le rôle de terminal principal. Les autres terminaux sont des terminaux secondaires qui sont appairés au terminal principal. Lorsqu'un terminal secondaire doit déchiffrer un contenu à accès conditionnel, il est tout d'abord vérifié qu'il est en mesure de communiquer avec le terminal principal. II est ensuite vérifié que le terminal secondaire est appairé au terminal principal. Si tel est le cas, le terminal secondaire est en mesure de déchiffrer le contenu.

Ce système présente un inconvénient important. En effet, il repose sur la présence d'un terminal principal qui gère les autorisations d'accès à un contenu par l'intermédiaire des terminaux secondaires. Dans le cas où le terminal principal n'est pas en mesure de fonctionner, soit qu'il est éteint, soit qu'il est en panne, par exemple, l'ensemble du système est paralysé. De plus, s'il est possible, de manière frauduleuse, d'attribuer à deux terminaux différents la fonction de terminal principal, il est alors possible de créer deux réseaux indépendants parfaitement fonctionnels.

La présente invention se propose d'offrir une solution plus fiable, autonome et assurant que seuls les décodeurs réellement utilisés par un abonné légitime fonctionnent correctement et permettent le déchiffrement d'événements chiffrés. De plus, cette solution ne nécessite aucune manipulation de la part de l'utilisateur honnête.

Selon cette invention, un décodeur et le module de sécurité qui y est associé fonctionnent de manière transparente pour l'utilisateur autorisé, aussi longtemps qu'ils restent dans leur environnement "habitue". Cela signifie que l'utilisateur n'aura pas besoin d'effectuer de manipulation, en particulier, aucun réactivation périodique du module de sécurité n'est nécessaire aussi longtemps que son décodeur et son module de sécurité restent dans leur environnement.

Par contre, en cas d'utilisation "inhabituelle", en particulier lorsque l'ensemble décodeur/module de sécurité a été revendu, le déchiffrement des données n'est pas autorisé et est arrêté automatiquement.

Le but de l'invention est atteint par un procédé de gestion du traitement de données à accès conditionnel par au moins deux décodeurs associés à un abonné et comportant des moyens d'activation/désactivation du traitement des données à accès conditionnel et des moyens de communication locaux agencés pour permettre une communication entre les décodeurs de l'abonné, ce procédé comprenant les étapes suivantes :
- réception, par les moyens de communication locaux (10) d'un premier décodeur (STB), d'au moins un message provenant d'au moins un second décodeur (STB) associé audit abonné;
- détermination du nombre minimum de décodeurs différents dudit abonné à partir desquels ledit premier décodeur doit recevoir des messages;
- comparaison entre d'une part le nombre de décodeurs différents desquels ledit premier décodeur a reçu un message et d'autre part le nombre minimum de décodeurs desquels ce premier décodeur doit recevoir un message;
- désactivation du traitement des données à accès conditionnel par ledit premier décodeur (STB) s'il n'a pas reçu de messages du nombre de décodeurs différents requis,
**caractérisé en ce que** le nombre minimum de décodeurs dudit abonné à partir desquels ledit premier décodeur doit recevoir des messages est au moins égal à un de moins que la majorité absolue du nombre total de décodeurs associés audit abonné.

Ce but est également atteint par un décodeur destiné au traitement de données à accès conditionnel, ce décodeur étant associé à un abonné et comportant des moyens d'activation/désactivation du traitement de ces données à accès conditionnel et des moyens de communication locaux agencés pour permettre une communication locale entre ledit décodeur et au moins un autre décodeur associé à cet abonné, caractérisé en ce qu'il comporte :
- des moyens de traitement de messages reçus par les moyens de communication locaux (10), ces moyens de traitement étant agencés pour déterminer quel décodeur (STB) de l'abonné a émis le message;
- des moyens de détermination et de mémorisation du nombre minimum de décodeurs différents dudit abonné à partir desquels ledit décodeur doit recevoir des messages;
- des moyens de comparaison entre d'une part le nombre de décodeurs différents desquels ledit décodeur a reçu un message et d'autre part le nombre minimum de décodeurs associé à l'abonné, desquels ce décodeur doit recevoir un message.

De façon simplifiée, le procédé selon l'invention permet de déterminer si les décodeurs sont placés à proximité les uns des autres. Si tel est le cas, les décodeurs fonctionnent de façon conventionnelle. En revanche, si l'un des décodeurs est déplacé, par exemple chez un autre utilisateur, ce décodeur sera désactivé et ne sera plus capable de déchiffrer des données chiffrées. Les autres décodeurs appartenant à cet abonné fonctionnent normalement de sorte qu'il est possible de déplacer un décodeur pour lui faire subir des réparations, sans pour autant bloquer tous les décodeurs de l'abonné.

L'invention sera mieux comprise grâce à la description détaillée qui va suivre et qui se réfère aux dessins annexés donnés à titre d'exemples nullement limitatifs, dans lesquels:
- la figure 1 illustre des éléments permettant la mise en oeuvre de deux modes de réalisation du procédé de l'invention; et
- la figure 2 représente les éléments pour la mise en oeuvre d'un autre mode de réalisation du procédé de l'invention.

L'invention est décrite ci-dessous en référence à plusieurs modes de réalisation, dans lesquels il est supposé qu'un abonné déterminé dispose de plusieurs décodeurs STB1, STB2, STB3,... chacun d'eux comportant un module de sécurité ICC1, ICC2, ICC3,.., qui peut par exemple être réalisé sous la forme d'une carte à microprocesseur ou carte à puce ou sous la forme d'un boîtier de circuit intégré. Dans les modes de réalisation illustrés, l'abonné possède quatre ensembles décodeur/module de sécurité. Le procédé de l'invention est applicable dès le moment où un abonné dispose d'au moins deux ensembles décodeur/module de sécurité. La limite supérieure n'existe pas du point de vue technique, mais est généralement fixée par l'opérateur. Elle est en principe comprise entre 5 et 10 décodeurs par abonné. II est à noter que dans la suite du texte, le terme de décodeur doit être compris au sens large, c'est-à-dire comme un élément permettant le décodage de données à accès conditionnel. Ces données peuvent concerner des événements de télévision à péage, mais également toute autre application dans laquelle il faut décoder des données pour accéder à un service. Les exemples de mode de réalisation décrits concernent essentiellement la télévision à péage. Dans ce cadre, le terme de décodeur peut être utilisé aussi bien pour désigner le décodeur seul que l'ensemble décodeur/module de sécurité, sauf si le contexte précise qu'il faut distinguer ces termes.

Les décodeurs tels qu'utilisés comportent tous des moyens de communication locaux 10 agencés pour émettre et recevoir des signaux ou des informations provenant d'autres décodeurs proches. La communication locale est possible sur une portée de l'ordre de quelques dizaines de mètres, de telle façon que des décodeurs placés dans un même appartement puissent communiquer entre eux alors que des décodeurs placés dans des appartements différents ne peuvent en principe pas communiquer.

Les moyens de communication 10 sont de types bien connus et utilisent des radiofréquences de façon à former un réseau sans fil. Chaque ensemble décodeur/module de sécurité ou de façon abrégée, chaque décodeur, joue alternativement le rôle d'émetteur et de récepteur, de sorte que le procédé de l'invention est identique, quel que soit le décodeur à partir duquel il est observé.

Le procédé de l'invention selon un premier mode de réalisation fonctionne de la manière suivante : Dans un premier temps, l'un des décodeurs, par exemple le décodeur STB1 agit comme émetteur et envoie un message par les moyens de communication locaux. Ce message peut contenir une partie variable ainsi qu'un identifiant unique correspondant soit au décodeur soit au module de sécurité utilisés. La partie variable change d'un message à l'autre. Ainsi, il n'est pas possible de stocker un message et de renvoyer ce message plusieurs fois au moyen d'un décodeur falsifié, en le faisant passer pour un vrai décodeur. Cette partie variable peut être une valeur numérique telle qu'une valeur de compteur ou par exemple l'heure et la date d'émission du message. Le message peut éventuellement contenir un identifiant correspondant à un numéro d'abonnement Cet identifiant permet de reconnaître si un message provient d'un décodeur lié au même abonné que celui auquel appartient le décodeur qui a reçu le message ou s'il appartient à un autre abonné. Ceci peut arriver par exemple lorsque des décodeurs d'abonnés différents sont proches, notamment dans deux appartements voisins. Ce message est chiffré de telle façon qu'il puisse être déchiffré par les autres décodeurs appartenant au même abonné. Pour ceci, les décodeurs/modules de sécurité d'un abonné peuvent disposer d'une table de clés, de type clé publique, clé privée, ou d'une clé de réseau commune à tous les décodeurs ou modules de sécurité d'un abonné et différente pour chaque abonné.

Lorsque l'un des décodeurs agit comme émetteur, les autres agissent comme récepteur. Ceux-ci reçoivent donc le message du décodeur émetteur STB1 par le biais des moyens de communication locaux et les traitent comme expliqué ci-dessous. Dans un premier temps, il est vérifié si le message est bien destiné au décodeur qui l'a reçu. Ceci peut se faire de manière bien connue, en utilisant un entête en clair dans le message. Ensuite, la clé de déchiffrement requise est déterminée. Cette clé peut être la clé de réseau, qui est identique pour tous les décodeurs/modules de sécurité d'un abonné ou être une clé spécifique qui dépend de la paire de décodeurs émetteur/récepteur du message. Ce message est ensuite déchiffré et les informations pertinentes qu'il contient sont mémorisées dans le décodeur ou le module de sécurité. Parmi les informations pertinentes, il y a notamment la partie variable, qui peut correspondre à la date et l'heure d'émission, ainsi que l'identifiant du décodeur qui a émis le message.

En se plaçant du point de vue d'un décodeur qui joue le rôle de récepteur, tous les messages qui le concernent sont ainsi mémorisés, pour une étape de vérification ultérieure.

Les décodeurs comportent une table de paramètres contenant des valeurs utilisées pour cette étape de vérification. Ces paramètres sont en particulier la durée maximale de fonctionnement d'un ensemble décodeur/module de sécurité sans recevoir de communication d'autres décodeurs du réseau, nommée par la suite "durée d'isolement", ainsi que le nombre minimum de décodeurs différents desquels doivent provenir des messages, nommée par la suite "nombre de décodeurs émetteurs". D'autres paramètres peuvent être contenus dans cette table de paramètres, comme notamment le nombre de décodeurs appartenant à l'abonné ou appartenant au même réseau.

Dans le procédé de l'invention, chaque décodeur fonctionne aussi longtemps qu'il reçoit des messages des autres décodeurs du même abonné, selon des conditions qui sont expliquées en détails ci-dessous. Lorsqu'un décodeur ne reçoit plus les messages des autres décodeurs, il est désactivé de sorte que le déchiffrement d'un contenu chiffré n'est plus autorisé.

Le paramètre de durée d'isolement permet de choisir la durée pendant laquelle un décodeur ne recevant plus de messages des autres décodeurs peut fonctionner, avant que le déchiffrement d'un contenu chiffré soit empêché. Cette durée peut être fixée par exemple à 48 heures, ce qui permet à un abonné d'utiliser l'un de ses décodeurs au maximum pendant ces 48 heures, hors de portée des moyens de communication locaux de ses autres décodeurs. Si, passée cette durée de 48 heures, le décodeur n'a pas reçu les messages requis, provenant des moyens de communication locaux des autres décodeurs du même abonné, le déchiffrement d'un contenu chiffré est empêché.

Le paramètre décrivant le nombre minimum de décodeurs desquels doivent provenir des messages, ou "nombre de décodeurs émetteurs" peut être fixé par l'opérateur et dépend généralement du nombre de décodeurs appartenant à l'abonné. Selon une réalisation avantageuse, ce nombre de décodeurs émetteurs correspond à un de moins que la "majorité absolue" des décodeurs, ce qui signifie que si le nombre de décodeurs est pair, il est égal à la moitié du nombre de décodeurs et s'il est impair, il est égal à la moitié du nombre de décodeurs, arrondie à la valeur inférieure. Concrètement, le nombre minimal de décodeurs émetteurs est égal à 1 pour un abonné ayant 3 décodeurs, à 2 pour un abonné ayant 4 ou 5 décodeurs, à 3 pour un abonné ayant 6 ou 7 décodeurs, etc. Le cas particulier où l'abonné dispose de deux décodeurs est traité plus bas.

Une précision doit être apportée en ce qui concerne le nombre de décodeurs émetteurs. En pratique, on cherche à former un réseau entre les différents décodeurs d'un abonné, ce réseau comportant un "nombre de participants" correspondant à la majorité absolue des décodeurs de cet abonné. Le nombre de décodeurs émetteurs est égal au nombre de participants moins un, du fait qu'un décodeur ne s'envoie pas de messages à lui-même.

Le paramètre du nombre de décodeurs appartenant à l'abonné est optionnel. **Il** peut servir d'une part à vérifier que l'abonné ne cherche pas à relier entre eux plus de décodeurs que le maximum autorisé par l'opérateur, et d'autre part, à calculer le nombre minimum de participants.

L'étape de vérification mentionnée précédemment se déroule de la façon suivante : le décodeur qui effectue la vérification détermine si, depuis une durée correspondant à la durée d'isolement, le décodeur a reçu des messages provenant d'un nombre de décodeurs différents correspondant au moins au nombre de décodeurs émetteurs.

A titre d'exemple, si la durée d'isolement est de 48 heures et que le nombre minimal de décodeurs émetteurs est de 3, chaque décodeur doit avoir reçu des messages d'au moins 3 décodeurs différents dans les dernières 48 heures. Si l'un des décodeurs ne répond pas à ces critères, le déchiffrement des données est désactivé pour ce décodeur.

Le but d'instaurer un nombre minimal de participants correspondant au moins à la majorité absolue du nombre de décodeurs est d'empêcher la création de deux réseaux autonomes opérationnels, à partir d'un réseau d'un seul abonné. Sans cette condition, il serait possible de prélever un certain nombre de décodeurs d'un réseau d'un abonné et de recréer un nouveau réseau, les deux réseaux fonctionnant alors de manière indépendante, par exemple chez deux utilisateurs différents.

La fréquence d'émission des messages par chaque décodeur peut être choisie librement, pour autant bien entendu, qu'elle soit inférieure à la durée d'isolement. Selon une réalisation concrète, cette fréquence peut être de par exemple un message par minute. Dans ce cas, seul le dernier message provenant de chaque décodeur différent est mémorisé dans les décodeurs "récepteurs". La partie variable contenue dans le message est comparée aux parties variables provenant des autres messages. Un message est considéré comme valide si la partie variable est différente des parties variables des autres messages. Cela signifie que, si l'on mémorise un message et qu'on le renvoie avec la même partie variable, il ne sera pas considéré comme valide et ne sera pas pris en compte dans les messages reçus au cours de la durée d'isolement.

Lorsqu'un ensemble décodeur/module de sécurité est désactivé parce qu'il n'a pas reçu le nombre minimal de messages pendant la durée d'isolement, ce qui peut par exemple se produire lorsque le décodeur a été éteint pendant une période supérieure à cette durée d'isolement ou lorsqu'il a été retiré du réseau pour lui faire subir une réparation notamment, il est nécessaire de le réactiver au moment où il réintègre le réseau. Ceci peut se faire de deux manières, à savoir automatiquement ou sur demande.

Dans le cas où la remise en fonction est automatique, il suffit d'alimenter le décodeur et d'attendre qu'il ait reçu des messages provenant de décodeurs différents correspondant au moins au nombre minimal de décodeurs émetteurs. Ce mode de réalisation est intéressant par le fait qu'il ne requière aucune manipulation lors de la remise en fonction. En contrepartie, il nécessite soit d'envoyer des messages à des fréquences relativement grandes, par exemple un message par minute et par décodeur, même si la durée d'isolement est nettement plus longue, soit d'attendre un temps relativement grand jusqu'à ce que la réactivation soit effective.

Dans le mode de réalisation manuel, il est nécessaire, lorsqu'un ensemble décodeur/module de sécurité est réintégré dans un réseau existant, de forcer une communication avec les autres décodeurs du réseau. Ceci peut se faire en envoyant un message par les moyens de communication locaux à partir du décodeur que l'on souhaite réintégrer, ce message requérant une réponse de tous les décodeurs qui l'ont reçu. Dans ce mode de réalisation, il est possible de prévoir des fréquences d'envoi des messages en fonctionnement normal nettement plus longues, par exemple un message toutes les heures, puisqu'il est possible de forcer l'envoi de messages lors de la réactivation d'un décodeur.

On peut également envisager que dès qu'un décodeur est alimenté après une coupure d'alimentation, il envoie une requête aux autres décodeurs leur demandant de lui transmettre un message. Ce mode de réalisation correspond à une réactivation sur demande, mais qui est invisible pour l'utilisateur puisqu'elle ne nécessite aucune manipulation de sa part.

Dans le mode de réalisation décrit ci-dessus, les messages émis par un décodeur sont transmis de façon directe à un décodeur récepteur, c'est-à-dire qu'il n'y a pas d'intermédiaire entre le décodeur émetteur et le décodeur récepteur. Si l'un des décodeurs est éteint lorsque l'on réactive un autre décodeur, ce dernier ne recevra pas les messages du décodeur éteint. Dans certaines configurations, ceci peut empêcher la réactivation du décodeur.

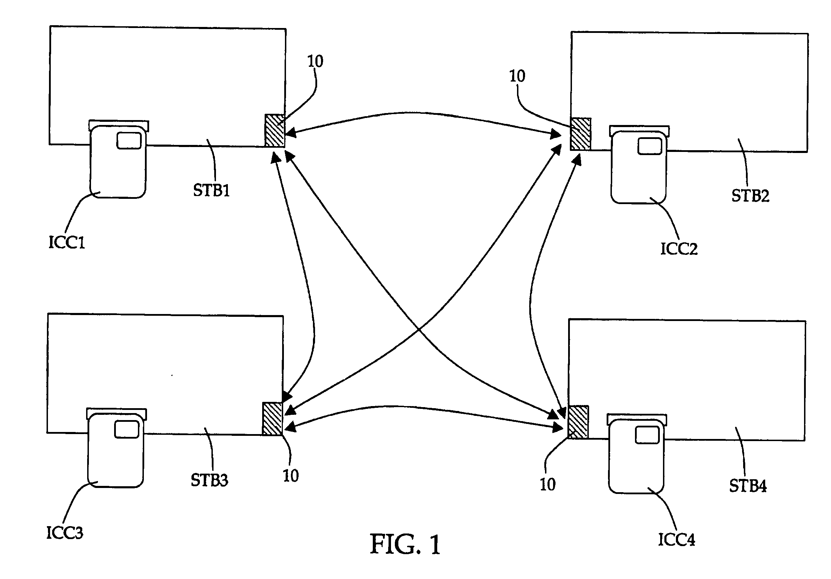

Un deuxième mode de réalisation de l'invention, qui utilise les éléments de la figure 1, permet de résoudre ce problème. Dans ce mode de réalisation, les messages reçus par chaque décodeur sont mémorisés dans ce décodeur ou dans le module de sécurité qui y est associé. Ces messages peuvent être à leur tour retransmis à un autre décodeur, de sorte que chaque décodeur peut servir de relais.

A titre d'exemple, on souhaite réactiver le décodeur STB 3 pendant que le décodeur STB2 est éteint. Le décodeur STB 1 a mémorisé le message du décodeur STB2 que ce dernier avait envoyé avant d'être éteint. Lorsque le décodeur STB3 est remis dans le réseau, il recevra un message direct du décodeur STB 1 et un message indirect du décodeur STB 2, envoyé par STB 1. En intégrant la date et l'heure dans les messages, il est possible de déterminer si ceux-ci sont suffisamment récents pour autoriser la réactivation du décodeur.

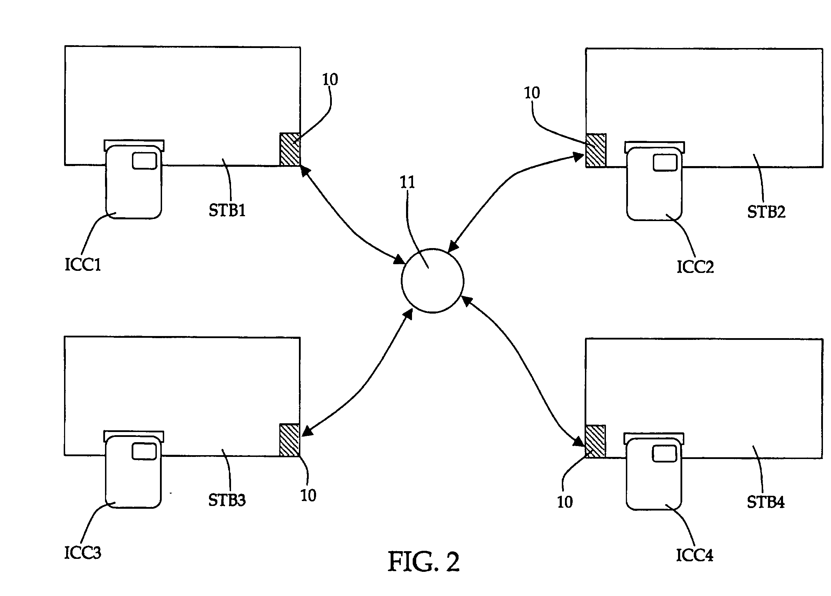

Dans une troisième forme de réalisation de l'invention, illustrée par la figure 2, les moyens de communication locaux 10 ne sont pas prévus pour établir une communication directe entre décodeurs, mais pour établir une communication bidirectionnelle entre les décodeurs et un serveur central 11. Ce serveur central reçoit les communications de chaque décodeur et les mémorise. Il est également prévu pour transmettre des messages aux décodeurs qui les traitent de façon décrite ci-dessus.

L'utilisation d'un tel serveur central 11 permet une plus grande souplesse dans la gestion des messages. Il est par exemple possible de demander aux décodeurs d'envoyer des messages de quittance lorsqu'ils ont reçu un message d'un décodeur déterminé. Ainsi, à titre d'exemple, si le deuxième décodeur STB2 a reçu un message du premier décodeur STB1, il est possible d'attendre relativement longtemps avant que ce premier décodeur STB1 ne renvoie un message au deuxième décodeur STB2. Par contre, si le troisième décodeur STB3 n'a pas reçu de message du premier décodeur STB1 et que la durée d'isolement approche de son terme, le serveur central pourra envoyer des messages à destinations du troisième décodeur STB3 à une fréquence plus élevée, jusqu'à ce que ce dernier envoie une quittance.

De plus, grâce à un tel serveur central 11, même si un décodeur est éteint au moment où il devrait recevoir un message, le serveur pourra le lui envoyer dès que le décodeur sera de nouveau enclenché. En effet, il est par exemple possible de prévoir que, lorsqu'un décodeur est enclenché après une période d'arrêt, il envoie une requête au serveur pour lui indiquer qu'il est de nouveau dans le réseau. Le serveur peut alors lui envoyer les messages qui le concernent, de sorte que, si les messages sont conformes aux paramètres fixés, le décodeur sera de nouveau immédiatement opérationnel.

Le cas où un abonné possède deux décodeurs est identique aux autres cas, à cela près que si un décodeur doit être sorti du réseau pour une raison ou une autre, le deuxième décodeur sera également désactivé à la fin de la durée d'isolement. Il ne sera alors plus possible de déchiffrer un contenu chiffré. Dans le cas où l'abonné possède au moins trois décodeurs, il est possible d'en retirer un du réseau sans que cela ne porte à conséquence sur le fonctionnement des autres décodeurs. Une solution envisageable consiste à informer un centre de gestion que l'un des décodeurs doit être sorti du réseau et que l'autre décodeur ne doit par conséquent pas être désactivé.

Une autre solution consiste à allouer à l'un des décodeurs, par exemple celui comportant le plus de fonctionnalités, un rôle privilégié. Ce décodeur est autorisé à fonctionner indépendamment de l'autre décodeur. Par contre, le deuxième décodeur nécessite toujours le premier pour fonctionner. En cas de panne ou de mise en service prolongée du deuxième décodeur, le premier continuera à fonctionner. Cette solution s'applique tout particulièrement au cas d'un décodeur secondaire utilisé seulement sporadiquement, par exemple le décodeur de la chambre d'amis qui reste longtemps éteint. Le décodeur principal continue de fonctionner et le décodeur secondaire ne peut fonctionner qu'après avoir été connecté au décodeur principal.

Dans la description ci-dessus, il est indiqué que les communications sont établies entre les décodeurs ou entre les ensembles décodeurs/modules de sécurité. Selon une variante, il est également possible de prévoir que les modules de sécurité eux-mêmes comportent des moyens de communication locaux, réalisés sous la forme d'une antenne placée dans un module tel qu'une carte à puce. Ainsi, l'envoi, la réception et le traitement des messages peuvent se faire directement par les modules de sécurité, sans transiter par les décodeurs.

Cette invention est avantageuse notamment par le fait que, lorsqu'un abonné dispose de plusieurs décodeurs, il est autorisé de déplacer l'un d'entre eux, par exemple pour réparation ou en week-end, sans empêcher les autres décodeurs de fonctionner. De plus, chaque décodeur est équivalent et joue à la fois le rôle d'émetteur et de récepteur. Ceci permet de sortir n'importe lequel des décodeurs du réseau, ce qui n'est pas le cas dans une configuration où l'un des décodeurs joue le rôle de maître et les autres, celui d'esclave.

## Revendications

1. Procédé de gestion du traitement de données à accès conditionnel par au moins trois décodeurs associés à un abonné et comportant des moyens d'activation/désactivation du traitement des données à accès conditionnel et des moyens de communication locaux agencés pour permettre une communication entre les décodeurs de l'abonné, ce procédé comprenant les étapes suivantes :
- réception, par les moyens de communication locaux (10) d'un premier décodeur (STB), d'au moins un message provenant d'au moins un second décodeur (STB) associé audit abonné;
- détermination du nombre minimum de décodeurs différents dudit abonné à partir desquels ledit premier décodeur doit recevoir des messages;
- comparaison entre d'une part le nombre de décodeurs différents desquels ledit premier décodeur a reçu un message et d'autre part le nombre minimum de décodeurs desquels ce premier décodeur doit recevoir un message;
- désactivation du traitement des données à accès conditionnel par ledit premier décodeur (STB) s'il n'a pas reçu de messages du nombre de décodeurs différents requis,
**caractérisé en ce que** le nombre minimum de décodeurs dudit abonné à partir desquels ledit premier décodeur doit recevoir des messages est au moins égal à un de moins que la majorité absolue du nombre total de décodeurs associés audit abonné, et **en ce que** chaque décodeur exécute ledit procédé.

2. Procédé selon la revendication 1, dans lequel on détermine une période au cours de laquelle ledit premier décodeur doit avoir reçu des messages d'un nombre minimum de décodeurs différents et dans lequel on désactive le traitement des données par ce premier décodeur si celui-ci n'a pas reçu de messages du nombre de décodeurs différents requis au cours de ladite période.

3. Procédé selon la revendication 1, **caractérisé en ce que** les messages sont transmis du second décodeur audit premier décodeur de façon directe.

4. Procédé selon la revendication 1, dans lequel un abonné est associé à au moins trois décodeurs, **caractérisé en ce que** les messages émis par l'un desdits décodeurs à destination dudit premier décodeur sont mémorisés dans au moins un autre décodeur, différent dudit premier décodeur et du décodeur ayant émis le message, et **en ce que** ledit premier décodeur reçoit des messages des décodeurs, soit de façon directe c'est-à-dire sans intermédiaire entre le décodeur ayant émis le message et ledit premier décodeur, soit de façon indirecte, c'est-à-dire par retransmission à destination dudit premier décodeur du message mémorisé dans ledit au moins un autre décodeur.

5. Procédé selon l'une quelconque des revendications précédentes, **caractérisé en ce qu'**au moins ledit second décodeur envoie un message à un serveur central (11) disposant de moyens de communication locaux et de stockage, et **en ce que** ledit premier décodeur reçoit au moins un message dudit second décodeur par l'intermédiaire dudit serveur central.

6. Procédé selon l'une quelconque des revendications précédentes, **caractérisé en ce que** les messages comportent un identifiant dudit décodeur ayant émis ce message.

7. Procédé selon la revendication 1, **caractérisé en ce que** les messages comportent une partie variable et **en ce que** le premier décodeur considère le message comme valide si cette partie variable est différente d'une ou des parties variables transmises précédemment.

8. Procédé selon la revendication 7, **caractérisé en ce que** la partie variable est une valeur de compteur.

9. Procédé selon la revendication 7, **caractérisé en ce que** la partie variable permet de déterminer la date et l'heure d'émission du message.

10. Procédé selon l'une quelconque des revendications précédentes, **caractérisé en ce que** les messages sont chiffrés au moyen d'une clé de chiffrement.

11. Procédé selon la revendication 10, **caractérisé en ce que** la clé de chiffrement est unique pour une paire d'ensembles décodeur/module de sécurité déterminée.

12. Procédé selon la revendication 10, **caractérisé en ce que** la clé de chiffrement est commune aux ensembles décodeur/module de sécurité d'un abonné.

13. Décodeur destiné au traitement de données à accès conditionnel, **caractérisé en ce qu'**il comporte des moyens pour exécuter le procédé selon l'une quelconque des revendications 1 à 12.

14. Décodeur selon la revendication 13, **caractérisé en ce qu'**il comporte des moyens de détermination d'une durée, dite durée d'isolement, cette durée étant la durée maximale de fonctionnement d'un décodeur pour lequel la comparaison entre le nombre de messages reçus et le nombre de messages à recevoir a donné un résultat négatif.

15. Décodeur selon l'une quelconque des revendications 13 ou 14, **caractérisé en ce qu'**il comporte un module de sécurité amovible, localement connecté au décodeur et **en ce que** les moyens de communication locaux (10), les moyens de traitement de messages, les moyens de détermination et de mémorisation et les moyens de comparaison sont placés dans ce module de sécurité.

## Claims

1. Management method for conditional access data processing by at least three decoders associated with a subscriber and including activation/deactivation means for the conditional access data processing and local communication means configured to allow communication between the subscribers' decoders, this process comprising the following steps:
- reception, by a first decoder's (STB) local communication means (10), of at least one message originating from at least one second decoder (STB) associated with said subscriber;
- determination of a minimum number of different decoders of said subscriber from which said first decoder must receive messages;
- comparison between, on one hand the number of different decoders from which said first decoder has received a message, and on the other hand the minimum number of decoders from which said first decoder must receive a message;
- deactivation of the conditional access data processing by said first decoder (STB) if it has not received at least one message from the required number of different decoders,
**characterized in that** the minimum number of decoders of said subscriber from which said first decoder must receive messages is at least equal to one less than the absolute majority of the total number of decoders associated with said subscriber, and **in that** each decoder executes said method.

2. Method according to claim 1, in which a period is determined during which said first decoder must have received messages from a minimum number of different decoders, and in which the data processing is deactivated by said first decoder if the latter has not received messages from the required number of different decoders during said period.

3. Process according to claim 1, **characterised in that** the messages are transmitted from the second decoder to said first decoder directly.

4. Process according to claim 1, in which a subscriber is associated with at least three decoders, **characterized in that** the messages transmitted by one of said decoders towards said first decoder are stored in at least one other decoder, different from said first decoder and from the decoder having emitted the message, and **in that** said first decoder receives messages from the decoders, either directly, i.e. without involving the decoder having emitted the message and said first decoder, or indirectly, i.e. by retransmission towards said first decoder of the message stored in said at least one other decoder.

5. Process according to any of the previous claims, **characterized in that** at least said second decoder sends a message to a central server (11) having local communication means and storage means, and **in that** said first decoder receives at least one message from said second decoder via said central server.

6. Process according to any of the previous claims, **characterized in that** the messages include an identifier of said decoder having issued this message.

7. Process according to claim 1, **characterized in that** the messages include a variable part and **in that** the first decoder considers a message to be valid if this variable part is different from one or more variable parts previously transmitted.

8. Process according to claim 7, **characterized in that** the variable part is a counter value.

9. Process according to claim 7, **characterized in that** the variable part permits the determination of the issue date and time of the message.

10. Process according to any of the previous claims, **characterized in that** the messages are encrypted by means of an encryption key.

11. Process according to claim 10, **characterized in that** the encryption key is unique for a determined pair of decoder/security module.

12. Process according to claim 10, **characterized in that** the encryption key is common to the decoder/security module pairs for one subscriber.

13. Decoder for conditional access data processing, **characterized in that** it comprises means for executing the process according to any of claims 1 to 12.

14. Decoder according to claim 13, **characterized in that** it includes means for determining a duration, called isolation duration, said duration being defined as the maximum operational duration of a decoder for which the comparison between the number of received messages and the number of messages to be received gives a negative result.

15. Decoder according to any of claims 13 to 14, **characterized in that** it includes a removable security module, locally connected to the decoder and **in that** the local communication means (10), the means for processing messages, the determination and storage means and the comparison means are located in said security module.

## Patentansprüche

1. Verfahren zur Verwaltung der Verarbeitung zugangskontrollierter Daten durch mindestens drei Decoder, verbunden mit einem Abonnenten und mit Mitteln zur Aktivierung/Deaktivierung der Verarbeitung der zugangskontrollierten Daten und örtlichen Kommunikationsmitteln zwecks einer Kommunikation zwischen den Decodern des Abonnenten, wobei das Verfahren die folgenden Schritte umfasst:
Empfang, durch die örtlichen Kommunikationsmittel (10) eines ersten Decoders (STB), mindestens einer Mitteilung, die von mindestens einem mit dem Abonnenten verbundenen zweiten Decoder (STB) stammt;
Ermittlung der Mindestzahl von verschiedenen Decodern des genannten Abonnenten, von denen der erste Decoder Nachrichten empfangen muss;
Vergleich zwischen einerseits der Zahl von verschiedenen Decodern, von denen der erste Decoder eine Mitteilung erhalten hat, und andererseits der Mindestzahl von Decodern, von denen dieser erste Decoder eine Mitteilung empfangen muss;
Deaktivierung der Verarbeitung der zugangskontrollierten Daten durch den ersten Decoder (STB), wenn er keine Mitteilungen über die Zahl der erforderlichen verschiedenen Decoder erhalten hat,
**gekennzeichnet dadurch, dass** die Mindestzahl von Decodern des genannten Abonnenten, von denen der erste Decoder Mitteilungen empfangen soll, mindestens gleich einem weniger als der absoluten Mehrheit der gesamten mit dem Abonnenten verbundene Zahl von Decodern ist, sowie dadurch, dass jeder Decoder besagtes Verfahren ausführt.

2. Verfahren nach Anspruch 1, bei dem man einen Zeitraum bestimmt, in dem der erste Decoder Mitteilungen von einer Mindestzahl von verschiedenen Decodern erhalten haben muss, und bei dem man die Datenverarbeitung durch diesen ersten Decoder ausschaltet, wenn dieser keine Mitteilungen über die Zahl der während dieses Zeitraums erforderlichen verschiedenen Decoder erhalten hat.

3. Verfahren nach Anspruch 1, **gekennzeichnet dadurch, dass** die Mitteilungen des zweiten Decoders an den ersten Decoder direkt übertragen werden.

4. Verfahren nach Anspruch 1, in dem ein Abonnent mit mindestens drei Decodern verbunden ist, **gekennzeichnet dadurch, dass** die von einem der genannten Decoder für den ersten Decoder ausgegebenen Mitteilungen in mindestens einem anderen Decoder gespeichert werden, der verschieden von dem ersten Decoder und von dem Decoder ist, der die Mitteilung herausgegeben hat, sowie dadurch, dass besagter erste Decoder Mitteilungen von den Decodern empfängt, entweder direkt, das heißt ohne zwischengeschaltete Stelle zwischen dem Decoder, der die Mitteilung herausgegeben hat, und dem ersten Decoder, oder indirekt, das heißt durch Zurücksendung der in dem mindestens einen anderen Decoder gespeicherten Mitteilung an den ersten Decoder.

5. Verfahren nach einem beliebigen der vorherigen Ansprüche, **gekennzeichnet dadurch, dass** mindestens der zweite Decoder eine Mitteilung an einen zentralen Server (11) sendet, der über örtliche Kommunikations- und Speichermittel verfügt, sowie dadurch, dass der erste Decoder mindestens eine Mitteilung des zweiten Decoders über die zwischengeschaltete Stelle des genannten zentralen Servers empfängt.

6. Verfahren nach einem beliebigen der vorherigen Ansprüche, **gekennzeichnet dadurch, dass** die Mitteilungen eine Identifizierung des Decoders enthalten, der diese Mitteilung herausgegeben hat.

7. Verfahren nach Anspruch 1, **gekennzeichnet dadurch, dass** die Mitteilungen einen veränderliche Teil enthalten sowie dadurch, dass der erste Decoder die Mitteilung als gültig betrachtet, wenn dieser veränderliche Teil verschieden von einem oder von den vorher übertragenen veränderlichen Teilen ist.

8. Verfahren nach Anspruch 7, **gekennzeichnet dadurch, dass** der veränderliche Teil ein Zählerwert ist.

9. Verfahren nach Anspruch 7, **gekennzeichnet dadurch, dass** der veränderliche Teil es gestattet, Datum und Uhrzeit der Ausgabe der Mitteilung zu bestimmen.

10. Verfahren nach einem beliebigen der vorherigen Ansprüche, **gekennzeichnet dadurch, dass** die Mitteilungen mittels eines Chiffrierschlüssels chiffriert sind.

11. Verfahren nach Anspruch 10, **gekennzeichnet dadurch, dass** der Chiffrierschlüssel eindeutig für ein Paar bestimmter Sicherheits-Decoder-/Modul-Einheiten ist.

12. Verfahren nach Anspruch 10, **gekennzeichnet dadurch, dass** der Chiffrierschlüssel den Sicherheits-Decoder-/Modul-Einheiten eines Abonnenten gemein ist.

13. Decoder für die Verarbeitung zugangskontrollierter Daten, **gekennzeichnet dadurch, dass** er Mittel umfasst, um das Verfahren nach einem beliebigen der Patentansprüche 1 bis 12 durchzuführen.

14. Decoder nach Anspruch 13, **gekennzeichnet dadurch, dass** er Mittel zur Ermittlung einer Dauer umfasst, genannt Isolierungsdauer, die die maximale Betriebsdauer eines Decoders ist, für den der Vergleich zwischen der Zahl der empfangenen Mitteilungen und der Zahl zu empfangender Mitteilungen ein negatives Ergebnis ergab.

15. Decoder nach einem beliebigen der Patentansprüche 13 oder 14, **gekennzeichnet dadurch, dass** er ein entfernbares Sicherheitsmodul umfasst, das örtlich mit dem Decoder verbunden ist, sowie dadurch, dass die örtlichen Kommunikationsmittel (10), die Mitteilungsverarbeitungsmittel, die Mittel zur Ermittlung und Speicherung und die Vergleichsmittel in diesem Sicherheitsmodul untergebracht sind.
